# EUROPEAN PATENT SPECIFICATION

(11) **EP 4 079 486 B1**
(45) Date of publication and mention of the grant of the patent: **18.11.2026**
(21) Application number: 21169444.3
(22) Date of filing: 20.04.2021
(51) Int. Cl.: B29C 44/34, B29C 44/38

(54) **METHOD FOR FORMING A MOLDED FIBER PRODUCT**
VERFAHREN ZUR HERSTELLUNG EINES GEFORMTEN FASERPRODUKTS
PROCÉDÉ DE FORMATION D'UN PRODUIT FIBREUX MOULÉ

(43) Date of publication of application: 26.10.2022
(73) Proprietor: Metsä Spring Oy, 02100 Espoo (FI); Valmet Technologies Oy, 02150 Espoo (FI)
(72) Inventor: HAAVANLAMMI, Arto, Jyväskylä (FI); TUOMINEN, Jarkko, Espoo (FI)
(74) Representative: Kespat Oy

(56) References cited:
- EP-A1- 1 492 926
- EP-A2- 1 273 418
- JP-A- 2002 283 389
- US-A1- 2009 121 375
- US-A1- 2017 190 101

## Description

The present invention relates to a method for forming a molded fiber product, in which method a layer is formed of foam including fibers, water, air and foaming chemical by a pair of molds, and in the method, foam is fed between the molds, and the pair is closed and opened.

EP-patent number 1373620B1 discloses a method of producing a three-dimensional fibrous web product. In the method foam is generated of at least water, air, and fibers. Then foam is fed in a mold and water together with air is removed by pressing. After forming the product is dried by heating. US2017190101 discloses a method for coating a product having a wall formed by at least a portion having at least partly a cell structure, preferably at least partly an open cell structure. US2009121375 discloses a multilayer-molding method including the steps of mixing at least one thermoplastic resin selected from a plurality of types of thermoplastic resins with a bubble-nucleating agent and a foaming gas.

In the known technology, foam is deposited to a deep basin like mold with a headbox. Due to separate forming and pressing sequences the forming and dewatering are slow, and foam may be spread unevenly to the mold. The method is suitable mainly for bulky and corrugated products like filters or insulators.

The object of the invention is to provide a new method for forming a molded fiber product, which is more versatile but faster than before. The characteristic features of the method according to the invention are stated in the accompanying Claims 1 - 15. The method includes several options to tune the process and the product itself. The process is enhanced with multiple forming and foaming units for quick phase batch process. It provides molded fiber product, which can replace plastic and aluminium in various packaging solutions.

The invention is described below in detail by referring to the enclosed drawings, which illustrate some of the embodiments of the invention, in which
- Figure 1a: shows a top view of formers for forming molded fiber products by the method according to the invention,
- Figure 1b: shows a side view of Figure 1a,
- Figure 2a: shows a top view of a drainage system of formers for forming molded fiber products by the method according to the invention,
- Figure 2b: shows a side view of Figure 2a,
- Figure 3a: shows a top view of a mold used in a method according to the invention,
- Figure 3b: shows a side view of the mold of Figure 3a together with a molded fiber product,

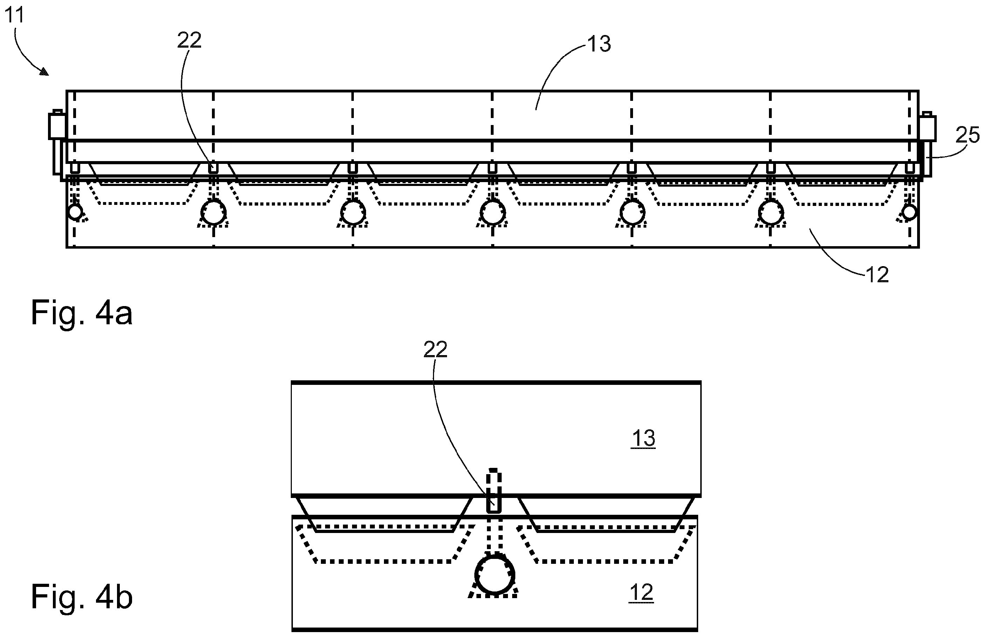

- Figure 4a: shows a side view of a pair of molds used in a method according to the invention,
- Figure 4b: shows a partial enlargement of Figure 4a.

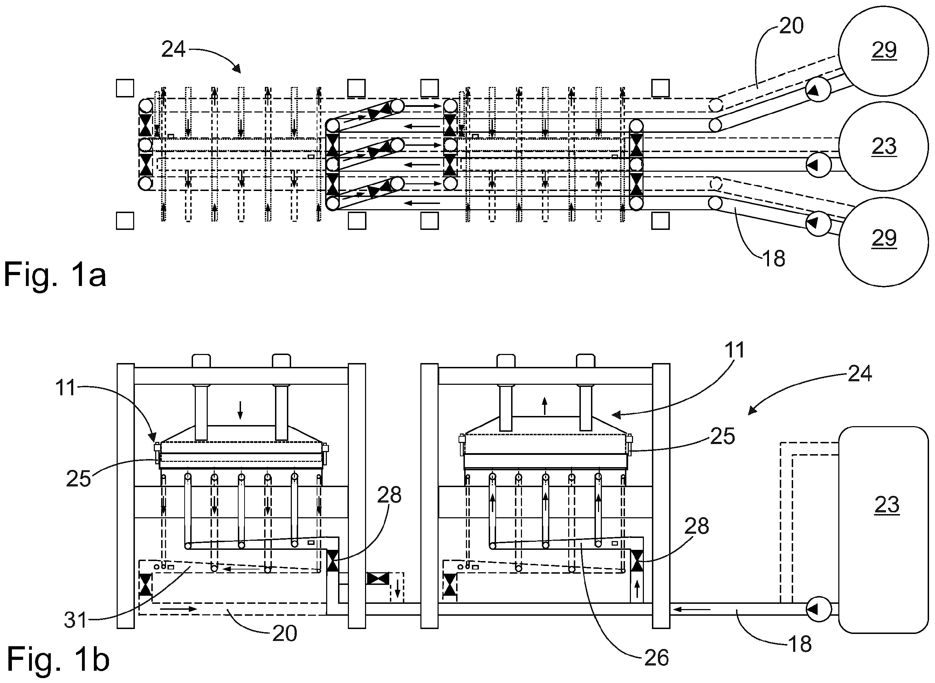

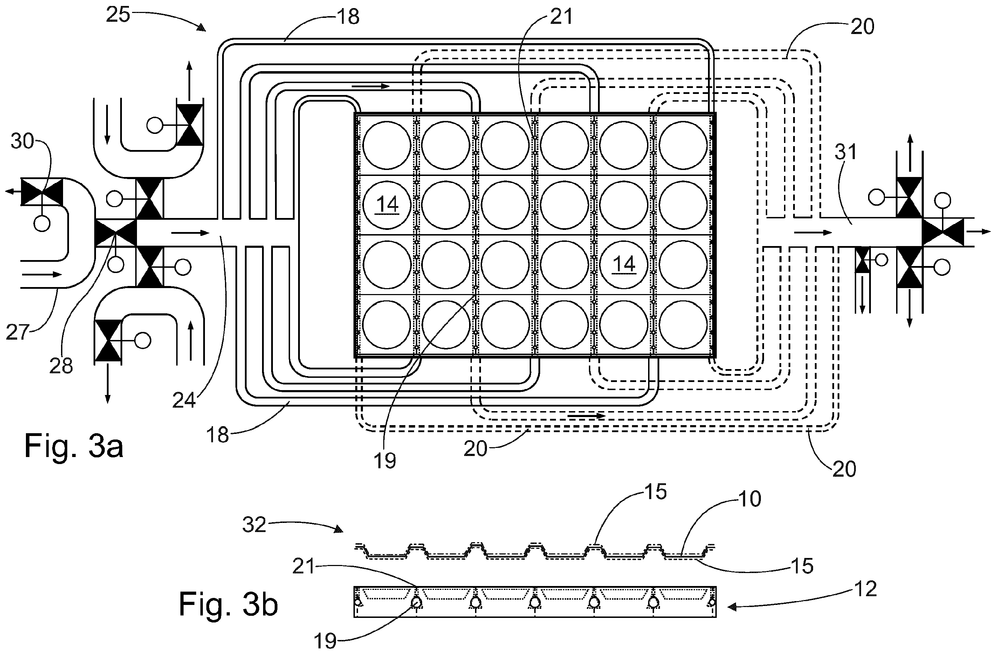

Figures 1a - 2b show the beginning of a production line utilizing the method according to the invention. The method is for forming a molded fiber product. In the method a layer 10 is formed of foam (Figure 3b). The layer is part of the final product and it is processed further in the production line. The foam includes fibers, water, air and one or more foaming chemicals. There can be also, for example fillers and other normal paper making chemicals like additives, pigments, colors and binders. Fibers can include all types of fibers from chemical and mechanical pulping, recycled fibers, broke, byproducts, micro- or nano-fibrillated cellulose and regenerated fibers and combinations thereof. The recipe for a single foam layer can consist of freely selected mixture of beforementioned raw materials. Naturally, recipes for different layers can vary from each other. The layer is formed by a pair 11 of molds 12 and 13. In practice, these forming molds consist of several partial molds each for one product or sub molds of several separate small products like cups in the partial mold. In Figure 3a the are 24 partial molds 14 combined together as a mold. In principle, one mold is a negative mold while the other one is a corresponding positive mold. In this way, during the forming the layer gets three-dimensional shape. The water and air of the foam must be removed. This is done mainly by closing the pair. In other words, the distance between the molds changes. When the pair is closing, the pressure forces air and water out of the foam fed between the molds 12 and 13. The porous product surfaces of the molds arrange the way out for water and air while the remaining fibers form a layer. After opening the pair, the layer can be moved to the next process stage. Foam is made with one or more foam generator. Foam generator acts also as a foam tank to keep and provide foam for foam feeding to the forming.

According to the invention, foam is fed via one of the molds 12 or 13 while the pair 11 is sealed from its sides. Thus, even the molds are apart, i.e. the pair is open, there is a closed cavity for foam. In this way, the feeding of foam is quick, and the timing can be selected more freely than before. Non-product surface of the mold is used for inlets for foam. In detail, through openings are in the selected edges of a partial mold and especially between facing surfaces of the adjacent partial molds. Foam may be fed via both molds. However, in the shown embodiment, the pair 11 is formed of an upper mold 13 and a lower mold 12, and the upper mold 13 is moved while the lower mold 12 is arranged stationary. In other words, the lower mold 12 is stationary, and foam is fed via it. The upper mold is movable. In this way, pipelines and other conduits connected to the lower mold also remain in place, and the movable upper mold can be light-weighted. The light upper mold can be moved quicky and precisely. This accelerates the forming stage. At the same time, the pipelines and other conduits stay stationary.

Since the pair is sealed, foam can be fed while the pair 11 is open, opening and/or closing. This shortens the forming cycle. For example in Figure 1b, foam is fed to the righthand pair 11 even if the upper mold 13 is just going up. On the other hand, the pair may be first opened and then foam is fed. The structure and function of the equipment are explained in more detail later.

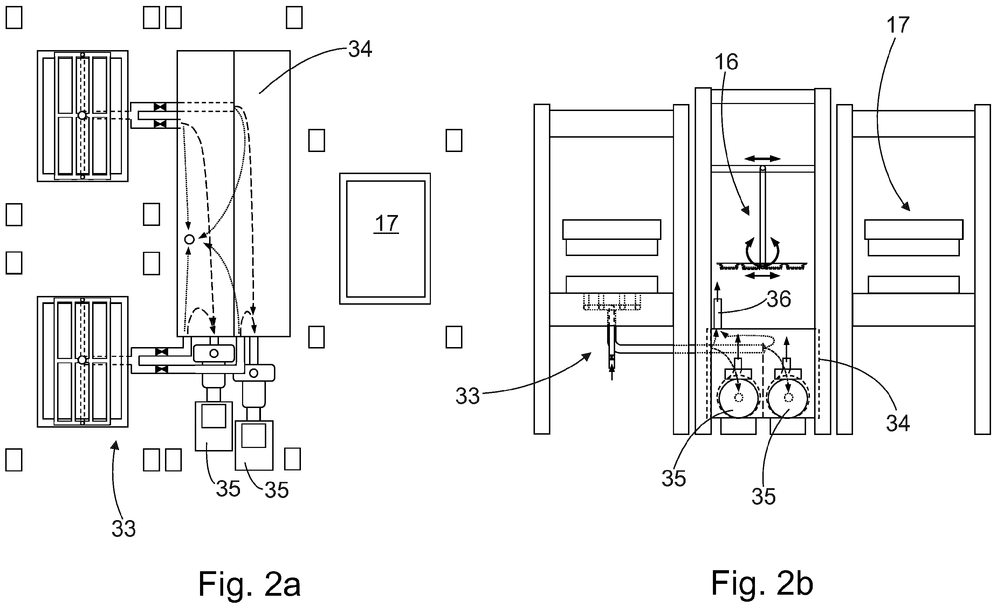

Feeding through the mold gives another advantage. Now it is possible to form in addition to one layer, multiple layers layer by layer. The formed layer may be removed out of the pair after forming. But, according to the invention, after closing the pair 11, i.e. after the layer is formed, the pair is opened again and more foam is fed for a further layer 15, and then the pair 11 is closed again. Also here, foam can be fed even when the pair is opening. In practice, 1 - 10, advantageously 2 - 4 further layers are formed. After forming and pressing the air and unbind water is removed and then the semi-finished product is moved to the next process stage. The next stage is hot-pressing for removing the water bound to fibers (Figure 2b). After the former, there is a transfer device 16 and then the first hot press 17. In Figure 3b is shown one product with three layers, which finally stick together in the hot-pressing. Surprisingly, the further layer 15 can be formed on either side of the fiber product. In other words, when a product is formed with one or more layers, foam is fed to either side of the previous layer. For example, first can be formed one inner layer as a body layer and then one layer on both side of the inner layer as surface layers. Then there will be three layers in total.

A multi-layered product may be implemented in another way. The product is combined of multi-layered partial products from two pairs 11. In the shown embodiment, there is two parallel pairs 11 close to each other. Then the formed partial products from these two pairs can be combined and hot-pressed as a single product. For example, in one pair is formed one inner layer with one bottom layer. Simultaneous in the other pair is formed one inner layer with one top layer. When combining these layers, a product with four layers is formed.

Forming several layers quickly in one product is a great benefit. However, according to the invention, foam can be exchanged before forming the further layer. In other words, foams with different properties can be used in forming one product. In this way, the layers may differ from each other. Like said before, the product may include, for example, one or two inner layers formed from one kind of foam. Then there can be at least one outer layer of another kind of foam. Thus, foams are altering in cross-sectional profile of the product.

Surprisingly, the fiber product is formed without extra heating. Since the foam has low water content and lot of air, water is efficiently removed, and the product keeps its form after forming. Simultaneously, foam stays in shape and power consumption is low. More precisely, the temperature of the foam is maintained between 15 - 45, advantageously 25 - 35 degrees Celsius. If necessary, the foam generators, foam tanks or molds may have cooling to keep temperature stable.

Also, in low temperatures, the fibers of the products have still some moisture. Then during the hot-pressing, the moisture is driven out as water and steam with heat which also arranges smooth surface and helps with inner bonding to form a solid layered product.

The foam stays in shape outside the foam generator in the pipe flows a quite short time, like a minute or two in maximum. According to the invention, the foam is circulated before and after feeding. In practice, the before feeding, the produced foam is led near the mold. If it is not fed into the mold, it is circulated back to the foam generation. Correspondingly, if the foam is led into the mold, it is again circulated back to the production until the pair opens. Just in time the pair opens, foam is fed into the mold space. When the pair is closed again, feeding stops and water is drained out of the pair. Simultaneously air is removed. Water and air removal with pressing can be aided by vacuum. In practice, the drained water is collected and returned to the foam generation. Advantageously, waters from different foams have their own tanks or compartments in a single tank. Foam may be supplemented with at least one chemical, which is circulated back to foam generation. Then the returned water includes said chemical, which is used when producing more foam.

Although a single layer product can also be made by the method according to the invention, the method is advantageous when forming multiple layers. Foam is made from water, air, fibers and foaming chemical. Foam contains small fractions or particles of the fibers in question. Also, foaming chemical is used to aid foam generation and in keeping foam in shape. The fibers may vary extensively, for example, wood or vegetable fibers (for example straw, bagasse and bamboo) may be used, but also man-made cellulosic fibers are possible. In proper foam, water and fibers and possible additives are evenly distributed on the bubble walls of the foam. In other words, the foam is a non-flocculating heterogeneous fibrous raw material, in which the air of the bubbles carries the fibers and any other raw materials to the forming process. When using foam, the retention of the fibers is also very high. In practice, more than 99% of the fibers remain in the product formed from the thick foam as a carrier medium. Also, the additives can have different retention according to the purpose. In practice, the additives can follow the water and circulate in the process, thereby saving, for example, foaming chemicals.

By forming the fiber product of several layers, the properties of the product can be tailored in many ways. For example, the basic structure and surface properties can be formed with different foam compositions. In practice, each layer can have own process. For example, the rigid body of the product can be formed from cheaper fibers and then the surface layers from higher quality material. Compared to the known processes using aqueous fiber slurry, in foam the fiber density is much higher. Simultaneously, the amount of water within the bubble walls circulating is also considerably smaller and the water removal at the forming is easy. Foam with small water volumes enables fast cycles of the process.

According to the method, the exchange of foam fractions or types for different layers of the product is now possible. Preferable, there is a further pair of molds within the same foam circulation. In this way the circulation continues almost without break. At the same time, foam remains alive and uniform in the foam circulation. In the circulation foam flows a few meters per second. Even though, foam is fed rapidly inside the mold space, especially when vacuum is used.

In a proper foam the bubbles are not separated, and fibers are evenly distributed. During the forming the foam is dispensed into a mold space between two molds. The volume of the mold space is defined according to the layer thickness required, for example.

With the sealed pair of molds there are much more possibilities to adjust the forming process than before. For example, the formation of the next layer can be on either side of the previous layer. Also, feeding can start already during the opening of the pair. This is advantageous since during the opening, the mold space is filled immediately with foam without excess air.

According to the invention, foam is fed through the mold. In Figure 3a is shown the mold 12 with inlets 18. More precisely, each inlet is connected to a lateral channel 19 through the mold 12 and there is also a return conduit 20. In this way foam flows constantly though the mold. Advantageously, the lateral channels 19 open between the products via several openings 21 on the mold surface, more precisely to a neck area between the product areas of the mold. In this way, foam will spread quickly and evenly between the molds. Here, the openings are situated on the neck area between the products, and they are upward. At the same time, the opposite mold has pins 22 at the points of the openings 21. The pins have two main tasks. First, each pin guides the molds during the closing. This keeps the pair in shape and the product precise. Second, each pin closes the opening of its own. So, the closing the pair automatically shuts off the feed preventing backflow into the inlets or lateral channels. Vice versa, opening the pair opens the lateral channels and foam fills the mold space.

Also vacuum can be used. Vacuum aids water and air removal. Vacuum can be opened even during feeding, but at the latest when the closing starts. In the forming, the mold space diminishes, but not close as in actual pressing after forming. The stroke length of the mold is adjusted according to the target thickness of the product either with a mechanical stopper, by measuring the pressure in the mold space or the position of the mold. In addition, it is possible to keep the product under vacuum on the surface of the desired mold to form the further layer on the selected side of the earlier layer.

During compression, the foams of the next layer are exchanged by rapid valve openings to the next mold opening, where the foam of the next layer is fed.

Unexpectedly, the forming is done without heating to control the optimal foam structure for a uniform formation of the product. In practice, the forming runs in a constant process temperature, advantageously between 15 - 45 degrees Celsius. In addition to the pair of molds, this temperature is maintained in the entire foam system to ensure an optimal bubble size for product quality, for example and lifetime of the foam gets longer. Also, air is easier to remove than steam and the layer remains unharmed and the process stable. In practice, the foam includes air more than 50%, advantageously 55 - 75%.

The fibers in use enable to achieve an optimum bubble size for quality forming. Commonly, the bubble size of the optimal foam in the formation is about 10 - 500 µm, preferably 50 - 150 µm in diameter. Also, freshness and consistent quality of the foam is ensured by continuous recycling of the supplied foam nearby the foam generator of the foam tank. Actually, the foam generator is a tank with stirring means in it. As shown in Figures 1a and 1b, the foams of each layers circulate to the mold and back to the foam tank in their own lines. In addition, water sucked from the molds can be recycled back to the water tank in its own lines.

Surprisingly, the foam process simultaneously achieves high consistency and good formation compared to prior art aqueous slurry formation. Said water-based process requires higher heat and dewatering time while the consistency is much lower, and formation is poorer due flocculation. The less water used in the foam process can be more easily removed from smaller openings. Preferably, the surface of the mold is permeable to gas through small capillary holes or even from pores whose water permeability is insufficient for the aqueous slurry process. This improves the quality of the product by reducing the hole marking or even removing it completely from the product surfaces. The layered product is formed in layers on top of each other, in which case the pressing and dewatering either through the previous layer or below it directly against the mold and binds the layer structure at the latest in hot-pressing. The layered product can be formed in an optional layer order. In other words, forming may start from the middle layer or one of the surface layers.

High-speed layering is enabled by servo-controlled valves, in which case the foam supply, air and dewatering valves can be run quickly and accurately in synchronism. The vacuum system is also placed in the immediate vicinity of the molding to ensure rapid operation. The bonding of the layers to each other is ensured by dewatering through the layer interfaces in the formation. Bonding continues in the subsequent hot-pressing, where the heat and the steam generated in the product and the steam driven through the boundary layers also strengthen the bonding of the layers to each other. Layering can be done with the same fibers, but different additives can be used in different layers. The method forms a product blank containing several products, which is preferably uniform for transfers to further processes. The product blank can be supported for hot-pressing and conveyors from there onwards. After transferring the product blank, the molds are preferably sprayed clean with water before the forming. In the further process, the properties of the next formed product, such as surface properties, are further influenced at each stage by an explanation of how any product property is improved at each stage.

The first hot-pressing removes water from the product as water and partly as steam. Hot smooth mold provides a second smooth surface for smoothing the second surface of the product. The counterpart has vacuum in the dewatering direction. The second hot-pressing evaporates the rest of the moisture applied to the other surface from the product and gives a smooth surface to the product surface of the product. There are also application tools for treading or modifying the layers or surfaces of the products to suit different end use requirements. With the drying means, the treated surface of the product is dried non-contact and quickly, preferably with hot air or radiation heating. The actual products are detached from the product blank by stamping or cutting and packed automatically. Quality products have several layers. These products take time to manufacture, but the profit is better.

The Figures show a method for forming a molded fiber product. The method includes a foam generator 23 for forming foam from fibers, water, air and foaming chemical. The properties of the foam can vary as earlier described. In addition, the method includes a pair 11 of molds 12 and 13 with distance variability. In other words, the distance between the molds can be varied. In practice, after feeding the foam, the molds are pressed together for removing water and air, and thereby forming the product.

In addition, the method further includes means 24 for feeding foam between the molds 12 and 13 to form a layer 10. A single layer may form the product, but advantageously the product includes several layers, which is now possible with the method according to the invention. According to the invention, as a part of the means 24, one of the molds 12 or 13 has several lateral channels 19 arranged to open between the molds 12 and 13. In this way, foam is fed rapidly and evenly. In addition, the pair 11 is sealed from its sides. Then foam can be fed even when the molds are apart and also during the moves too. This shortens the process cycle and gives more options in tuning the process and the product.

For sealing, the pair 11 has an outer sleeve 25 arranged to seal the pair 11 even the molds 12 and 13 at a distance for each other. In this way, a close mold space is formed, and a great volume of foam can be fed to the mold space, which is like a closed cavity. Advantageously, the outer sleeve 25 is adjustable in relation to the pair 11. Thus, the sleeve may slide and give room for the product when the product is removed and shifted to the hot-pressing. There may be one common sleeve or both molds may have a sleeve of their own.

The foam generator 23 is arranged near to the pair 11. Then the foam keeps its shape till it reaches the mold space. In practice, the foam generator with its tank is under 20 meters from the pair, advantageously under 10 meters. In addition, the foam generator 23 is connected to the lateral channels 19 by inlets 18 via a manifold 26. Like in Figure 3a, each lateral channel 19 has its own inlet 18. Here there are seven inlets 18. When the inlets are positioned on two sides there is space enough for inlets and their connections. By the manifold foam is distributed evenly to all of the lateral channels.

Before the manifold 26 there is a short circulation 27 back to the foam generator 23. In this way foam remains high quality. Foam can be fed to the manifold 26 by opening a feed valve 28. This takes time and flow of the foam may be prevented to the short circulation. According to the invention, each lateral channel 19 extends over the mold 12 and is connected to a return conduit 20 connected to the foam generator 23. In this way fresh foam feed is stabilized and constantly circulated through the mold. The actual feeding is described later. Anyway, the feeding takes only few seconds.

As shown, the method includes one or more further foam generator 29 connected independently to the same manifold 26. In this way different foams can be used to form multi-layered products. At the same time, it is quick to change the foam from one to another and all foam generators maintain foam ready for forming. For this, each foam generator 23 has for foam a short circulation 27 before the manifold 26. During feeding, the short circulation 27 is closed with a valve 30 and the feed valve is opened. Also the return conduits 20 are connected to a return manifold 31 which has connections back to each foam generator.

Figure 1b shows the former according to the invention from behind. Advantageously, the method includes two parallel pairs 11 connected to the same foam generator 23 but arranged to work in different phases. As well the further foam generators are shared. In this way the method is compact and fast. In Figure 1b, the left-hand pair is closing while the righthand pair is opening. Thus, different foams can be used flexibly, and hot-pressing can get product from both formers by turns. On the other hand, one big foam generator may supply foam to several formers.

Advantageously, the pair 11 includes an upper mold 13 and a lower mold 12. In addition, the upper mold 13 is movable while the lower mold 12 is arranged stationary also including the lateral channel 19. In this way, the moving mass in minimized, and the inlets can be also stationary.

With the closed mold space, the molds can be apart during the forming. This can be used as a control parameter. Also, the opened pair gives space for the foam. In practice, the distance between the molds 12 and 13 is 10 - 100 mm, preferably 20 - 60 mm. Generally, the thicker layer, the bigger distance. In addition, the inlets 18 have a diameter of 40 - 120 mm, preferably 60 - 100 mm. In this way, the flow speed of the foam keeps moderate. In practice, the speed is 1 - 3 meter per second.

As mentioned earlier, the pair 11 includes several partial molds 14 or sub molds. In Figure 3b are 24 partial molds combined as the lover mold 12. Here, 24 plates are formed at one time. The product blank 32 is also shown in Figure 3b. Here the product blank has three layers and individual products are separated later in the process. The mold has a frame into which different partial or sub molds can be change. Thus, with one method, many kinds of products may be formed.

According to the invention, the lateral channels 19 are arranged between partial molds 14 or sub molds, and they include openings 21 to the mold surface. In this way, each partial or sub molds are evenly filled with foam. Thus the products are uniform, and the process is quick. The next feature also influences to the speed. According to the invention, the pair 11 includes movable pins 22 each of which is arranged to close a corresponding opening 21 in order to control the flow of the foam. In practice, foam circulates through the mold. When the upper mold is lifted, the pins come out of the openings, and the foam flows into the mold space. The filling is quick, and again when the pair closes, the pins close the openings. This valving feature can be used with the actual valves before the manifold or independently. When the openings are closed, foam can be changed. Each foam is returned back to its own foam generator. Thank to quick valves, the mixing of different foam can be prevented or at least minimized.

After the mold space is filled with foam, water and air is removed by pressing. The mold surface is porous. So water and air can go through the mold surface while the fibers accumulate on the mold surface. In other words, the lower mold 12 is porous and there is collection equipment 33 beneath. In this way, water will naturally drop. However, the collection equipment 33 includes an underpressurized water reservoir 34 connected back to the foam generator 23. First, the collection equipment 33 collects also air. Then the mold will be totally empty for next forming. Also, with air the water flows more efficiently. Here, the water is removed from the below of the mold with conduit in the middle. In addition, water removal can be aided with overpressure from the opposing mold and/or replacement air through blead air valve in the molds end of the vacuum system. Again, for each foam there is own part in the water reservoir. In this way, the removed water can be used again in the foam generator in question. For this, two pumps 35 are enclosed. In Figure 2a, the dot lines illustrates under pressure which is led to the sealed water reservoir via a connection 36. The dashed lines illustrate water coming from the pairs.

## Claims

1. Method for forming a molded fiber product, in which method a layer (10) is formed of fibers by a pair (11) of molds (12, 13), and in the method, fibers are fed between the molds (12, 13), and the pair (11) is closed and opened, **characterized in that** foam including fibers, water, air and foaming chemical is formed before feeding, and foam including air bubbles carrying the fibers is fed before the pair of molds is closed via one of the molds (12, 13) having several lateral channels (19) arranged to open between the molds (12, 13) while the pair (11) is sealed from its sides, and foam is circulated near the molds (12, 13) before and after feeding.

2. Method according to claim 1, **characterized in that** foam is fed while the pair (11) is open, opening and/or closing.

3. Method according to claim 1 or 2, **characterized in that** after closing the pair (11) is opened and more foam is fed for a further layer (15), and the pair (11) is closed.

4. Method according to claim 3, **characterized in that** foam is fed to either side of the previous layer.

5. Method according to claim 4, **characterized in that** foam is exchanged before forming the further layer (15).

6. Method according to any of claims 1 - 5, **characterized in that** the fiber product is formed without extra heating.

7. Method according to claim 6, **characterized in that** the temperature of the foam is maintained between 15 - 45, advantageously 25 - 35 degrees Celsius.

8. Method according to any of claims 1 - 7, **characterized in that** before and after feeding the foam is circulated.

9. Method according to any of claims 1 - 8, **characterized in that** water and air removal is aided by vacuum.

10. Method according to any of claims 1 - 9, **characterized in that** foam is supplemented with at least one chemical, which is circulated back to the foam generation.

11. Method according to any of claims 1 - 10, **characterized in that** the further layer (15) is formed on either side of the fiber product.

12. Method according to any of claims 1 - 11, **characterized in that** 1 - 10, advantageously 2 - 4 further layers (15) are formed.

13. Method according to any of claims 1 - 12, **characterized in that** the product is combined of multi-layered partial products from two pairs (11).

14. Method according to any of claims 1 - 13, **characterized in that** several partial molds (14) or sub molds are included to the pair (11).

15. Method according to any of claims 1 - 14, **characterized in that** the pair (11) is formed of an upper mold (13) and a lower mold (12), and the upper mold (13) is moved while the lower mold (12) is arranged stationary.

## Patentansprüche

1. Verfahren zur Herstellung eines geformten Faserprodukts, bei dem unter Verwendung eines Paares (11) von Formen (12, 13) eine Schicht (10) aus Fasern gebildet wird, wobei bei diesem Verfahren Fasern zwischen die Formen (12, 13) zugeführt werden, und das Formpaar (11) geschlossen und geöffnet wird, **dadurch gekennzeichnet, dass** vor dem Einbringen ein Schaum, einschließlich Fasern, Wasser, Luft und Schaumbildner, hergestellt wird und dass der Schaum, der die Fasern tragende Luftblasen enthält, vor dem Schließen des Formpaares über eine der Formen (12, 13) zugeführt wird, die mehrere seitliche Kanäle (19) aufweist, die so angeordnet sind, dass sie sich zwischen den Formen (12, 13) öffnen,während das Formpaar (11) an seinen Seiten abgedichtet ist, und der Schaum vor und nach dem Einführen in der Nähe der Formen (12, 13) zirkuliert wird.

2. Verfahren nach Anspruch 1, **dadurch gekennzeichnet, dass** Schaum zugeführt wird, während das Paar (11) geöffnet ist, sich öffnet und/oder schließt.

3. Verfahren nach Anspruch 1 oder 2, **dadurch gekennzeichnet, dass** nach dem Schließen das Paar (11) geöffnet und weiterer Schaum für eine weitere Schicht (15) zugeführt wird, woraufhin das Paar (11) geschlossen wird.

4. Verfahren nach Anspruch 3, **dadurch gekennzeichnet, dass** Schaum auf der einen oder der anderen Seite der vorherigen Schicht zugeführt wird.

5. Verfahren nach Anspruch 4, **dadurch gekennzeichnet, dass** vor der Herstellung der weiteren Schicht (15) der Schaum ausgetauscht wird.

6. Verfahren nach einem der Ansprüche 1 bis 5, **dadurch gekennzeichnet, dass** das Faserprodukt ohne zusätzliche Erwärmung hergestellt wird.

7. Verfahren nach Anspruch 6, **dadurch gekennzeichnet, dass** die Temperatur des Schaums zwischen 15 und 45, vorzugsweise zwischen 25 und 35 Grad Celsius, gehalten wird.

8. Verfahren nach einem der Ansprüche 1 bis 7, **dadurch gekennzeichnet, dass** der Schaum vor und nach der Zuführung zirkuliert wird.

9. Verfahren nach einem der Ansprüche 1 bis 8, **dadurch gekennzeichnet, dass** die Entfernung von Wasser und Luft durch Unterdruck unterstützt wird.

10. Verfahren nach einem der Ansprüche 1 bis 9, **dadurch gekennzeichnet, dass** dem Schaum mindestens eine Chemikalie zugesetzt wird, die zur Schaumerzeugung zurückgeführt wird.

11. Verfahren nach einem der Ansprüche 1 bis 10, **dadurch gekennzeichnet, dass** die weitere Schicht (15) auf der einen oder der anderen Seite des Faserprodukts gebildet wird.

12. Verfahren nach einem der Ansprüche 1 bis 11, **dadurch gekennzeichnet, dass** 1 bis 10, vorzugsweise 2 bis 4 weitere Schichten (15) hergestellt werden.

13. Verfahren nach einem der Ansprüche 1 bis 12, **dadurch gekennzeichnet, dass** das Produkt aus mehrschichtigen Teilprodukten aus zwei Paaren (11) zusammengesetzt ist.

14. Verfahren nach einem der Ansprüche 1 bis 13, **dadurch gekennzeichnet, dass** das Paar (11) mehrere Teilformen (14) oder Unterformen einschließt.

15. Verfahren nach einem der Ansprüche 1 bis 14, **dadurch gekennzeichnet, dass** das Paar (11) aus einer oberen Form (13) und einer unteren Form (12) hergestellt ist und die obere Form (13) bewegt wird, während die untere Form (12) stationär angeordnet ist.

## Revendications

1. Procédé de formation d'un produit fibreux moulé, dans lequel une couche (10) est formée à partir de fibres par une paire (11) de moules (12, 13) et dans lequel les fibres sont acheminées entre les moules (12, 13) avant que la paire (11) ne soit fermée puis ouverte, **caractérisé en ce qu'**une mousse composée de fibres, d'eau, d'air et d'un agent moussant est formée avant passage dans le dispositif, et une mousse comportant des bulles d'air portant les fibres est acheminée dans le dispositif avant que la paire de moules ne soit fermée par l'un des moules (12, 13) disposant de plusieurs canaux latéraux (19) s'ouvrant entre les moules (12, 13) pendant que la paire (11) est fermée hermétiquement sur ses bords, et la mousse circule à proximité des moules (12, 13) avant et après le passage dans le dispositif.

2. Procédé conformément à la revendication 1, **caractérisé en ce que** la mousse est acheminée dans le dispositif pendant que la paire (11) est ouverte, en train de s'ouvrir et/ou en train de se fermer.

3. Procédé conformément à la revendication 1 ou 2, **caractérisé en ce qu'**après la fermeture de la paire (11), celle-ci est ouverte et davantage de mousse est acheminée dans le dispositif (15), et la paire (11) est fermée.

4. Procédé conformément à la revendication 3, **caractérisé en ce que** la mousse est acheminée d'un côté ou de l'autre de la précédente couche.

5. Procédé conformément à la revendication 4, **caractérisé en ce que** la mousse est échangée avant formation de la nouvelle couche (15).

6. Procédé conformément à l'une quelconque des revendications 1 à 5, **caractérisé en ce que** le produit fibreux est formé sans chauffage supplémentaire.

7. Procédé conformément à la revendication 6, **caractérisé en ce que** la température de la mousse est maintenue entre 15 et 45, avantageusement 25 et 35 degrés Celsius.

8. Procédé conformément à l'une quelconque des revendications 1 à 7, **caractérisé en ce qu'**avant et après l'acheminement dans le dispositif, la mousse circule.

9. Procédé conformément à l'une quelconque des revendications 1 à 8, **caractérisé en ce que** le retrait de l'eau et de l'air est facilité par pression négative.

10. Procédé conformément à l'une quelconque des revendications 1 à 9, **caractérisé en ce qu'**au moins un agent chimique est ajouté à la mousse, lequel agent est réacheminé pour la génération de mousse.

11. Procédé conformément à l'une quelconque des revendications 1 à 10, **caractérisé en ce que** la nouvelle couche (15) est formée d'un côté ou de l'autre du produit fibreux.

12. Procédé conformément à l'une quelconque des revendications 1 à 11, **caractérisé en ce qu'**entre 1 et 10, avantageusement 2 et 4 nouvelles couches (15) sont formées.

13. Procédé conformément à l'une quelconque des revendications 1 à 12, **caractérisé en ce que** le produit est composé de produits partiels multicouches issus de deux paires (11).

14. Procédé conformément à l'une quelconque des revendications 1 à 13, **caractérisé en ce que** plusieurs moules partiels (14) ou sous-moules sont inclus dans la paire (11).

15. Procédé conformément à l'une quelconque des revendications 1 à 14, **caractérisé en ce que** la paire (11) est formée d'un moule supérieur (13) et d'un moule inférieur (12), et le moule supérieur (13) est mobile tandis que le moule inférieur (12) est prévu pour être stationnaire.
